# EUROPÄISCHE PATENTANMELDUNG

(11) **EP 0 785 493 A1**
(43) Veröffentlichungstag der Anmeldung: **23.07.1997**
(21) Anmeldenummer: 97200115.0
(22) Anmeldetag: 15.01.1997
(51) Int. Cl.: G05D 23/19, F24C 3/12, F24C 7/08

(54) **Verfahren zur Erzielung einer Behaglichkeitstemperatur in einem Raum und Anordnung zur Durchführung des Verfahrens**

(30) Priorität: 20.01.1996 DE 19602085
(71) Anmelder: Philips Patentverwaltung GmbH, 22335 Hamburg (DE); Philips Electronics N.V., 5621 BA Eindhoven (NL)
(72) Erfinder: Kersten, Reinhard, Dr., Röntgenstra e 24, 22335 Hamburg (DE); Klinkenberg, Klaus, Röntgenstra e 24, 22335 Hamburg (DE)
(74) Vertreter: Erdmann, Anton, Dipl.-Ing.

(57) **Zusammenfassung**

Die Erfindung bezieht sich auf ein Verfahren zur Erzielung einer Behaglichkeitstemperatur in der Umgebung einer in einem Raum (12) mit abgesenkter Temperatur befindlichen Person (15) mit Hilfe eines Strahlers (18). Gemäß der Erfindung wird die Behaglichkeitstemperatur dadurch schnell erreicht und stetig aufrecht erhalten,
a) daß stetig die Temperatur in der Umgebung des Strahlers (18) unter Vermeidung einer direkten thermischen Beeinflussung durch den Strahler (18) gemessen wird,
b) daß aus den Temperaturdaten mit Hilfe einer Elektronik (21) eine erforderliche Bestrahlungsstärke für die Person (15) errechnet wird,
c) daß der Abstand (A) der Person (15) vom Strahler (18) ermittelt wird und
d) daß entsprechend der ermittelten Bestrahlungsstärke und dem ermittelten Abstand die jeweils erforderliche Leistung in den Strahler (18) eingespeist wird.

## Beschreibung

Die Erfindung bezieht sich auf ein Verfahren zur Erzielung einer Behaglichkeitstemperatur in der Umgebung einer in einem Raum mit abgesenkter Temperatur befindlichen Person mit Hilfe eines Strahlers.

Für nicht kontinuierlich genutzte Räume kann es wirtschaftlich sein, diese nur bei Bedarf aufzuheizen. Voraussetzung dabei ist allerdings, daß für den Nutzer eines solchen Raumes bereits nach kurzer Zeit, z.B. in weniger als 10 Minuten, ein thermischer Komfort vorhanden ist, d.h. eine sogenannte Behaglichkeitstemperatur vorliegt. Dies kann dann, wenn die Zusatzheizung z.B. elektrisch betrieben wird, trotz höherer Energiepreise für Strom immer noch erheblich wirtschaftlicher sein als durchgehend mit Gas zu heizen.

Für derartige Einsatzfälle werden heute überwiegend elektrische Heizlüfter und elektrisch beheizte Ölradiatoren verwendet, die jedoch beide nicht den oben genannten Anforderungen genügen:

Heizlüfter saugen kalte Raumluft aus dem Fußbodenbereich an und erwärmen sie auf etwa 90°C. Diese Heißluft kühlt sich durch Mitführung von und durch Mischung mit kalter Raumluft schnell ab und führt durch die forcierte Luftbewegung zu Zugerscheinungen. Daneben stellt sich eine erhebliche Temperaturschichtung über die Höhe des Raumes ein, die ohne weiteres 10°C betragen kann und zu unkomfortablen Verhältnissen führt (heißer Kopf und kalte Füße). Thermischer Komfort stellt sich bei Verwendung derartiger Heizlüfter erst dann ein, wenn entweder die Lufttemperatur so hoch ist, daß die Abstrahlung der kalten Wandflächen kompensiert wird, oder die Wandtemperaturen entsprechend angehoben sind. Für Räume in konventionellen Gebäuden muß dafür mit Zeiten von etwa einer Stunde gerechnet werden, um von etwa 16°C ausgehend komfortable Verhältnisses zu erreichen. Weitere erhebliche Nachteile von Heizlüftern sind Geräusche, Staubaufwirbelung, Gerüche durch Ansengen von Staubteilen an den Heizspiralen und Austrocknen von Augen und Schleimhäuten durch den Luftstrom.

Ölradiatoren haben eine relativ große Wärmekapazität, sie benötigen etwa 10 Minuten, ehe sie ihre Betriebstemperaturen erreichen und ihre volle Leistung an den Raum abgeben. Die Wärme wird nur zu etwa 60% in Form von Strahlung abgegeben, und zwar aufgrund der Bauform wenig effizient gerichtet und ziemlich diffus. Somit ist auch hier keine schnelle Komfortverbesserung für den Raumnutzer erzielbar. Daneben ist die volle gespeicherte Wärmemenge nach Verlassen des Raumes nicht mehr nutzbar. Außerdem sind Ölradiatoren recht groß und relativ schwer.

Eine andere Möglichkeit der Zufuhr zusätzlicher Heizenergie besteht in der Verwendung elektrischer Heizstrahler, z.B. in der Art der heutigen Badezimmerstrahler(Quarzrohrstrahler). Jedoch bewirkt dabei die recht niedrige Quarzrohrtemperatur von etwa 1000°C eine relativ niedrige Leistungsdichte von etwa 14W/cm Länge. Dies bedeutet etwas zu große Abmessungen für die erforderliche Leistung von etwa 1,5 bis 2 kW und damit eine schlechte Fokussierbarkeit auf ein definiertes zu bestrahlendes Feld oder auf einen Körper. Derartige Strahler sind zwar geeignet, auch bei niedrigen Umgebungs- und Lufttemperaturen durch eine definierte Zusatzstrahlung dem Raumnutzer innerhalb kürzester Zeit angenehme Konditionen zu gewährleisten. Dabei muß die Zustrahlung jedoch so begrenzt werden, daß thermischer Komfort, d.h. eine sogenannte Behaglichkeitstemperatur, eingehalten wird, auch wenn sich die Umgebungstemperaturen im Laufe der Nutzungszeit ändern.

Ein Verfahren der eingangs genannten Art und eine entsprechende Anordnung, bei welcher ein elektrischer Heizstrahler verwendet wird, ist z.B. durch die WO 94/16370 bekannt geworden. Bei der bekannten Bauart geht es darum, sparsam umzugehen mit Heizenergie für Geschäftsräume, in denen sich Personen nur zeitweise aufhalten. Dabei werden die genannten Räume durch konventionelle Heizmethoden zunächst bis auf eine Temperatur erhitzt, die unterhalb der sogenannten Behaglichkeits- bzw. Komforttemperatur liegt. Sobald eine Person diesen Raum betritt, wird zusätzlich Wärme mit Hilfe des Strahlers herangeführt, der an der Decke des genannten Raumes angeordnet und z.B. elektrisch oder mit Gas beheizt werden kann. Ein Sensor, welcher die Funktionen des Strahlers im Hinblick auf die Anwesenheit einer Person im Raum überwacht, ist z.B. fest im Strahler angeordnet.

Der Erfindung liegt die Aufgabe zugrunde, mit einfachen Mitteln ein eingangs genanntes Verfahren derart zu verbessern, daß innerhalb kürzester Zeit, z.B. in weniger als 10 Minuten, dem Nutzer eines Raumes mit abgesenkter Temperatur ein thermischer Komfort gewährleistet wird, der auch bei einer Veränderung der Umgebungsbedingungen durch eine entsprechende Regelung eingehalten werden kann.

Diese Aufgabe wird bei einem Verfahren der eingangs genannten Art dadurch gelöst,
a) daß stetig die Temperatur in der Umgebung des Strahlers unter Vermeidung einer direkten thermischen Beeinflussung durch den Strahler gemessen wird,
b) daß aus den Temperaturdaten mit Hilfe einer Elektronik eine erforderliche Bestrahlungsstärke für die Person errechnet wird,
c) daß der Abstand der Person vom Strahler ermittelt wird und
d) daß entsprechend der ermittelten Bestrahlungsstärke und dem ermittelten Abstand die jeweils erforderliche Leistung in den Strahler eingespeist wird.

Ein derartiges Verfahren beruht auf der Überlegung, daß der menschliche Körper in einem ständigen Wärmeaustausch mit seiner Umgebung steht. In erster Linie wird dabei der thermische Komfort, d.h. die jeweils gewünschte Behaglichkeitstemperatur, beeinflußt durch die mittlere Temperatur der den Raum begrenzenden Flächen (Strahlung) und durch die Lufttemperatur im Umgebungsbereich der Person (Konvektion). Daneben sind die Luftgeschwindigkeit und die Luftfeuchte ebenfalls von Bedeutung, letztere allerdings nur untergeordnet. Liegen die für die Behaglichkeit gewünschten Umgebungsbedingungen innerhalb bestimmter Grenzen vor, so empfindet der Mensch dies als komfortabel. Um dem Raumnutzer trotz niedriger Strahlungstemperatur der ihn umgebenden Raumbegrenzungsflächen und zu niedriger Raumlufttemperatur schnell und dauerhaft thermischen Komfort bieten zu können, werden gemäß der Erfindung die sich negativ auf den thermischen Komfort auswirkenden Umgebungsparameter rasch durch die zusätzliche Strahlungsquelle kompensiert. Das Konzept geht davon aus, daß die sich negativ auf den thermischen Komfort auswirkenden Parameter am günstigsten in der Umgebung der zusätzlichen Strahlungsquelle gemessen werden, unter der Voraussetzung, daß die Strahlungsquelle die Messung selbst nicht direkt beeinflußt. Durch stetige Messung an dieser Stelle erfolgt eine Regelung und Anpassung an unterschiedliche Bedingungen.

In Ausgestaltung der Erfindung ist vorgesehen, daß die Temperaturmessung sowohl die durch Konvektion bewirkte Lufttemperatur als auch die Strahlungstemperatur der Raumbegrenzungsflächen erfaßt. Es werden also die Umgebungsparameter Strahlungs- und Lufttemperatur ständig gemessen, damit man daraus die erforderliche Strahlungskompensation bestimmen kann. Kennt man ferner die Abhängigkeit der zur Erzielung einer gewünschten Behaglichkeitstemperatur erforderlichen Bestrahlungsstärke des Strahlers vom Abstand zur Person (Gerätedaten, die abhängig sind von Strahlungsverteilung und Anschlußleistung), so kann die jeweils erforderliche Leistung des Strahlers einfach angepaßt werden. Dieser Abstand kann gemäß einem weiteren Merkmal der Erfindung entweder von Hand eingestellt und als konstante Größe in die Elektronik eingegeben oder durch einen Sensor automatisch und stetig gemessen werden.

Die Erfindung bezieht sich ferner auf eine Anordnung zur Durchführung des oben beschriebenen erfindungsgemäßen Verfahrens und ist gekennzeichnet
- durch mindestens einen im Raum angeordneten, auf die Person ausgerichteten Strahler,
- durch ein in der Umgebung des Strahlers angeordnetes und durch diesen nicht thermisch direkt beeinflußtes Meßgerät zur Erfassung der Temperatur und
- durch eine Elektronik zur Auswertung der Temperatur-Meßwerte und zur Steuerung der dem Strahler zugeführten Energie.

Bei einer derartigen Bauweise ist somit lediglich erforderlich, neben der genannten Temperaturmessung den Abstand zwischen der Person und dem Strahler in die Elektronik einzugeben. Dies kann in Ausgestaltung der Erfindung z.B. mittels einer Tastatur oder eines Drehknopfes erfolgen, wenn der Abstand von Hand ermittelt bzw. eingestellt wird. Größere Entfernungseinstellung bedeutet größere Strahlerleistung, kleinere Entfernung kleinere Strahlerleistung. Somit ist auch eine einfache individuelle Anpassung an größere oder geringere Komfortansprüche über eine größere oder kleinere Entfernungseinstellung möglich.

In einer anderen Ausgestaltung der Erfindung ist vorgesehen, daß im Bereich des Strahlers ein Meßgerät zur Erfassung des Abstandes zwischen Person und Strahler angeordnet ist. Dabei wird der jeweilige Abstand der Person zum Strahler automatisch erfaßt und der Elektronik zugeführt. Das Meßgerät kann in weiterer Ausgestaltung der Erfindung ein Ultraschall-Meßgerät oder ein Infrarot-Meßgerät sein.

Eine weitere Ausgestaltung der Erfindung besteht darin, daß der Strahler beweglich angeordnet und mittels eines Bewegungsmelders auf die Person ausrichtbar und nachführbar ausgebildet ist. Diese Ausgestaltung der Erfindung ermöglicht somit auch die Erzielung einer gewünschten Behaglichkeitstemperatur an verschiedenen Orten des Raumes.

In weiterer Ausgestaltung der Erfindung ist vorgesehen,
- daß die von der Umgebungstemperatur des Strahlers abhängige, für die Erzielung einer gewünschten Behaglichkeitstemperatur erforderliche Bestrahlungsstärke für die Person in Form einer ersten Tabelle in der Elektronik abgelegt ist und
- daß in einer zweiten Tabelle in der Elektronik die von der Bestrahlungsstärke und vom Abstand Strahler - Person erforderliche Strahlerleistung abgelegt ist.

In der Zeichnung sind in den Fig. 1 bis 3 Ausführungsbeispiele des Gegenstandes gemäß der Erfindung schematisch dargestellt.
Fig. 1 zeigt in einem Diagramm eine bekannte Behaglichkeitslinie,
Fig. 2 zeigt schematisch einen Raum mit einer Person und einem Zusatz-Heizstrahlkörper, und
Fig. 3a - 3c zeigen Heizstrahlkörper mit verschiedenen integrierten Sensoren.,

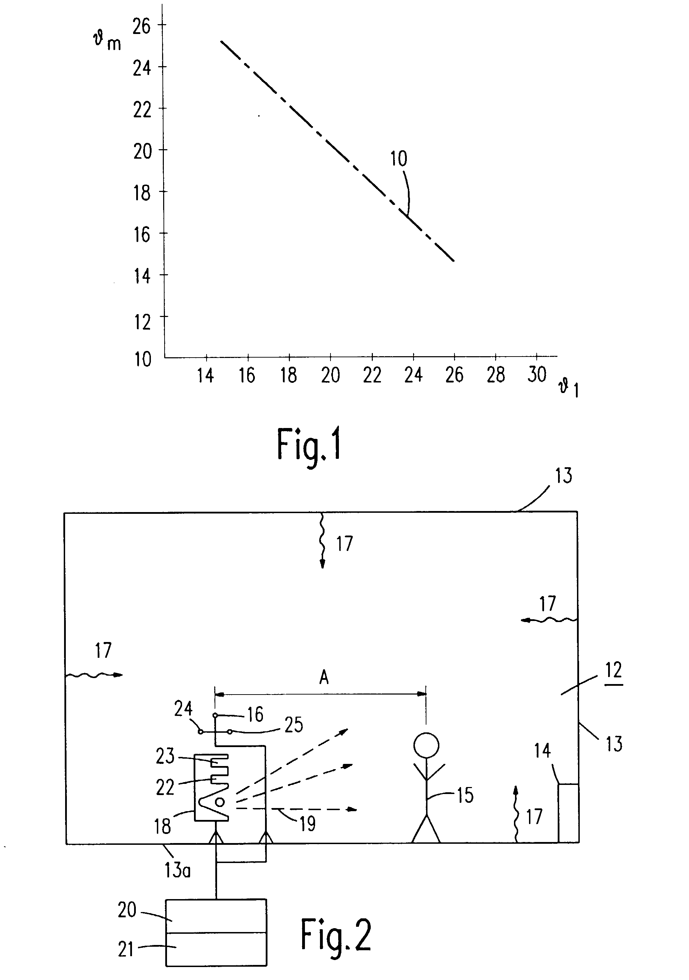

Gemäß Fig. 1 ist in dem bekannten Diagramm die mittlere Umschließungsflächentemperatur ϑₘ über der Raumlufttemperatur ϑ₁ aufgetragen. Die strichpunktiert eingezeichnete Linie 10 zeigt die optimale Behaglichkeitslinie nach Fanger, siehe "Mensch und Raumklima" von P.O. Fanger, erschienen in "Raumklimatechnik", Band 1, Springerverlag 1994. Daraus ist z.B. zu entnehmen, daß eine gleiche Behaglichkeit empfunden wird, wenn die Raumlufttemperatur steigt und gleichzeitig die mittlere Umschließungsflächentemperatur fällt.

Fig. 2 zeigt einen Raum 12, der von Flächen 13 allseits begrenzt wird. Ein Heizkörper 14 sorgt für eine Grundwärme innerhalb des Raumes 12, die jedoch zur Erzeugung einer Komforttemperatur bzw. Behaglichkeitstemperatur für eine im Raum vorhandene Person 15 nicht ausreicht. In der Umgebung der Person 15 (typischerweise in einer Entfernung von 1 - 3 m) ist ein Temperaturmeßgerät 16 vorgesehen, welches die Temperatur in dieser Stelle messen soll. Die von dem Fühler 16 gemessene Temperatur wird zum einen beeinflußt von der mittleren Temperatur der Umgebungsflächen 13 des Raumes 12 und des Heizkörpers 14 (Strahlung) und zum anderen von der Lufttemperatur an diesem Ort, erzeugt durch die Luftströmungen, die z.B. von der Konvektion des Heizkörpers 14 ausgehen. Zur gezielten Verbesserung des thermischen Komforts im Bereich der Person 15 ist erfindungsgemäß auf dem Boden 13a des Raumes 12 ein Heizstrahler 18 vorgesehen, dessen Strahlung 19 in Richtung auf die Person 15 gerichtet ist. Der Heizstrahler 18 wird vorzugsweise in der Nähe des Temperaturmeßgerätes 16 aufgestellt, und zwar derart, daß das Temperaturmeßgerät 16 nicht im Strahlungsfeld des Heizstrahlers 18 steht. Mit 20 ist ein Leistungsnetzteil für den Strahler 18 bezeichnet. Mit 21 ist eine Elektronik, z.B. einen Mikroprozessor enthaltend, bezeichnet, welche einerseits mit dem Meßgerät 16 und andererseits mit dem Leistungsnetzteil 20 verbunden ist. Der Abstand zwischen Strahler 18 und der Person 15 ist mit A bezeichnet und wird von einem Meßgerät 22 im Strahler 18 erfaßt. Mit 23 ist ein verstellbar angeordneter Bewegungsmelder bezeichnet, der ebenfalls wie das Gerät 22 mit der Elektronik 21 verbunden ist. Sobald nun die Person 15 den Raum 12 betritt und den Bereich des Bewegungsmelders 23 erreicht, erfolgt eine Temperaturmessung durch das Meßgerät 16 und, falls die Temperatur zu niedrig ist, ein automatisches Ansteuern des Heizstrahlers 18. Dabei kann der Abstand A entweder von Hand fest eingegeben werden oder durch das Meßgerät 22 automatisch erfaßt werden. Die Elektronik 21 vergleicht die gelieferten Daten mit eingeprägten Solldaten und schaltet die Energiezufuhr für die Energiequelle 20 ab, sobald die gewünschte Behaglichkeitstemperatur im Bereich der Person 15 erreicht ist. Bei Bedarf kann der Heizstrahler 18 beweglich und der Person 15 nachführbar ausgebildet sein, indem der Bewegungsmelder 23 die jeweilige Position der Person 15 erfaßt und der Elektronik 21 meldet.

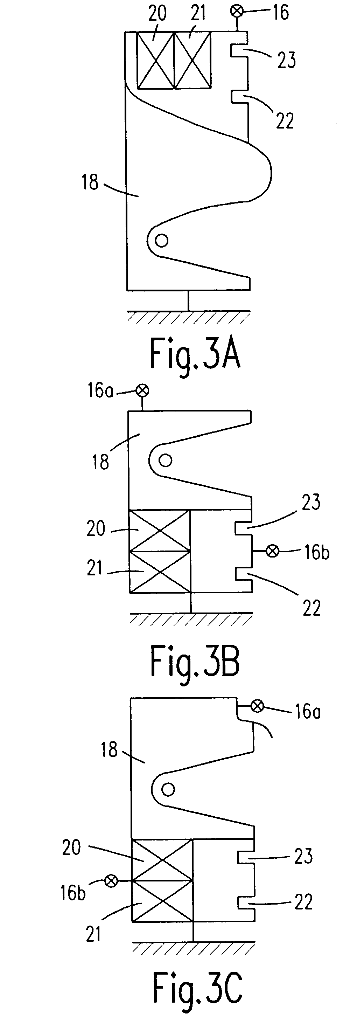

Fig. 3a, b und c zeigen bevorzugte Ausführungen, in denen der Heizstrahler 18, das Leistungsnetzteil 20, die Elektronik 21 und das Meßgerät 16 in einem einzigen Gerät zusammengefaßt sind. Dabei wird in allen Fällen darauf geachtet, daß der Fühler 16 nicht vom Heizstrahler 18 direkt beeinflußt wird, aber trotzdem die Temperaturbedingungen der Umgebung (Strahlung und Lufttemperatur) weitgehend ungestört erfaßt. In Fig. 3a ist deshalb der Temperaturfühler 16 auf dem gut wärmegedämmten Strahlergehäuse so angebracht, daß gegebenenfalls die heiße Luft vom Strahler vor dem Temperaturfühler 16 vorbeistreicht, ohne ihn zu beeinflussen. Es ist offensichtlich, daß der Temperaturfühler 16 in Fig. 3a die Wärmestrahlung vom Bodenbereich hinter dem Heizstrahler nicht gut erfaßt. In den Fig. 3b und 3c sind Anordnungen mit zwei Temperaturfühlern 16a und 16b gezeigt, die in ihrer Kombination alle Wandungen des Raumes mit ihrer Ausstrahlung besser erfassen. Als Meßgröße für die Temperatur gilt dann beispielsweise das arithmetische Mittel aus den Meßgrößen der Temperaturfühler 16a und 16b.

Nachstehend werden die Schritte zu einer gezielten Verbesserung des thermischen Komforts in dem Raum 12 dargestellt, und zwar in Form von zwei Ablaufdiagrammen. Bei dem ersten Ablaufdiagramm erfolgt die Einstellung des Abstandes A zwischen der Person 15 und dem Strahler 18 von Hand, und bei dem zweiten Ablaufdiagramm erfolgt eine vollautomatische Messung dieses Abstands A.

### 1. Ablaufdiagramm (Einstellung des Abstands von Hand)

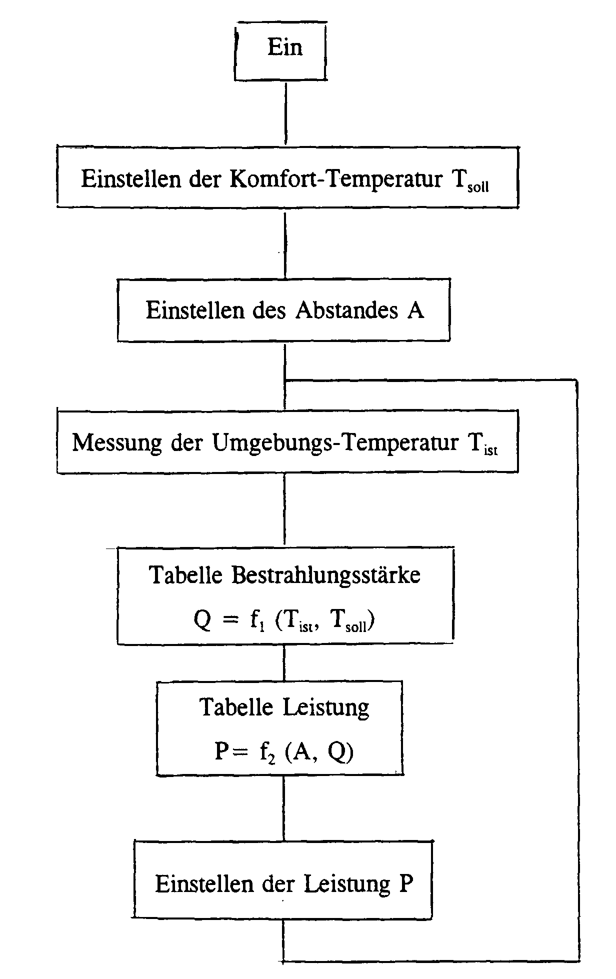

Nach Einschalten der Elektronik 21 wird zunächst die gewünschte Komfort-Solltemperatur Tₛₒₗₗ eingestellt. Sodann erfolgt die Einstellung des Abstandes A zwischen Person 15 und Strahler 18. Danach mißt die Elektronik 21 die Isttemperatur Tᵢₛₜ in der Umgebung des Meßgerätes 16 und vergleicht sie mit der gewünschten Komfort-Solltemperatur. Danach wird von der Elektronik 21 die erforderliche Leistung P_{Tsoll} ermittelt, die abhängig ist von dem Abstand A und der gemessenen Isttemperatur Tᵢₛₜ. Danach wird von der Energiequelle 20 dem Strahler 18 die erforderliche Leistung eingespeist.

### 2. Ablaufdiagramm (vollautomatische Messung des Abstandes)

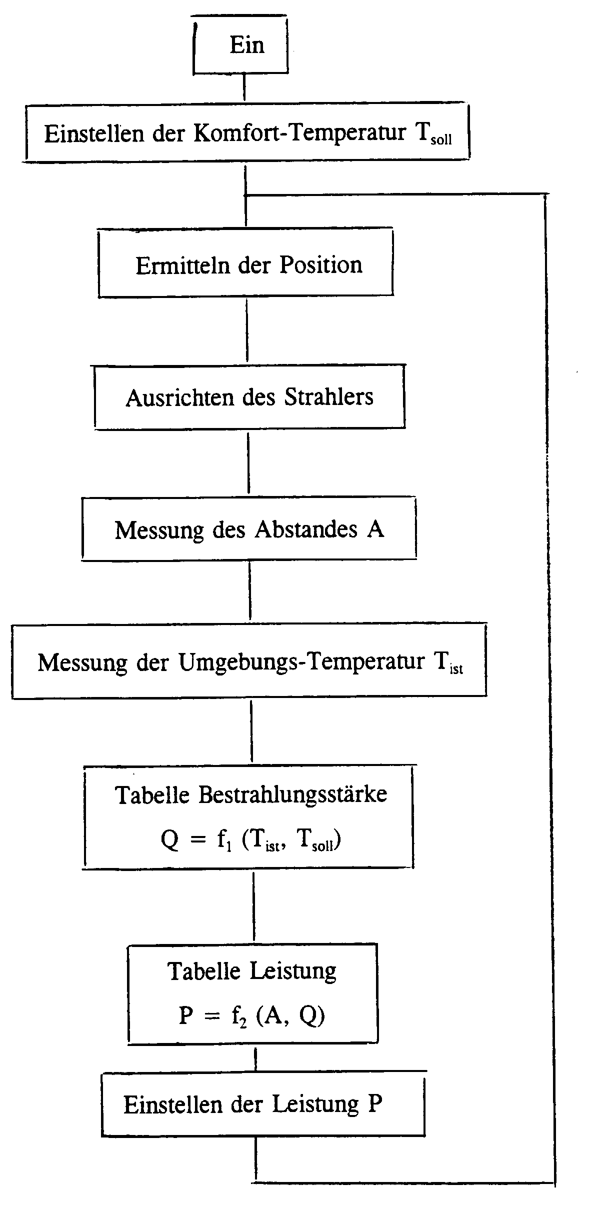

Im Unterschied zum 1. Ablaufdiagramm ermittelt der Bewegungsmelder 23 hier die Position der Person 15, richtet den Strahler 18 entsprechend aus und mißt den Abstand A. Der übrige Vorgang vollzieht sich entsprechend den Erläuterungen beim 1. Ablaufdiagramm.

Nachfolgend wird beispielhaft eine erste Tabelle 1 dargestellt, die den Zusammenhang zeigt zwischen der Umgebungstemperatur Tᵢₛₜ, der gewünschten Behaglichkeitstemperatur Tₛₒₗₗ und der sich daraus ergebenden Bestrahlungsstärke Q, gemäß der Formel: Q = f₁ (Tᵢₛₜ, Tₛₒₗₗ).

Eine zweite Tabelle 2 zeigt beispielhaft für einen Strahler 18 die von der Bestrahlungsstärke Q und von dem Abstand A zwischen dem Strahler 18 und der Person 15 abhängige erforderliche Strahlerleistung P gemäß der Formel: P = f₂(A, Q).

Beispielhafte Tabelle für die Bestrahlungsstärke entsprechend dem 1. und 2. Ablaufdiagramm

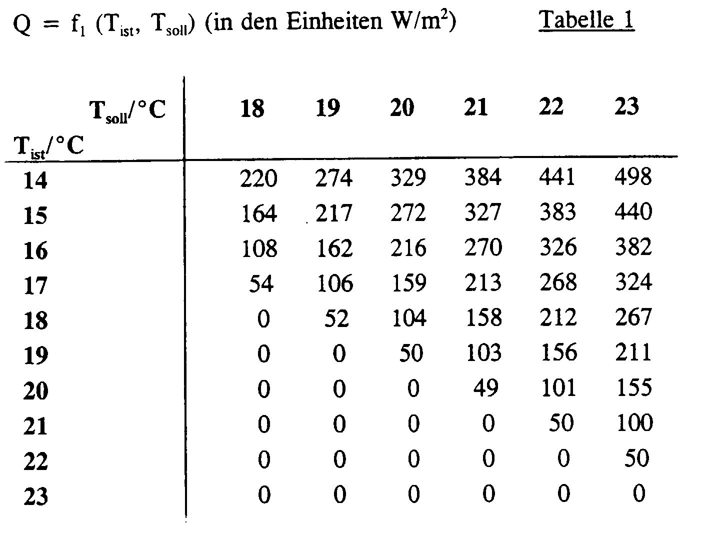

Beispielhafte Tabelle für die notwendige Leistung entsprechen dem 1. und 2. Ablaufdiagramm

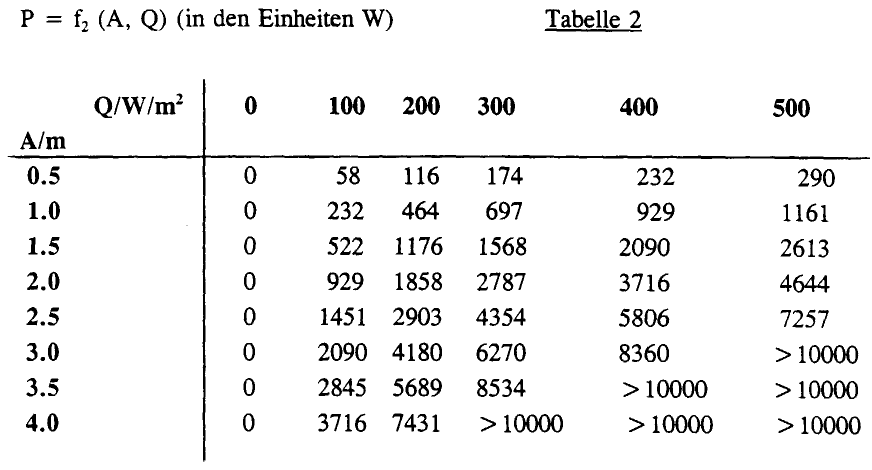

## Patentansprüche

1. Verfahren zur Erzielung einer Behaglichkeitstemperatur in der Umgebung einer in einem Raum (12) mit abgesenkter Temperatur befindlichen Person (15) mit Hilfe eines Strahlers (18), dadurch gekennzeichnet,
a) daß stetig die Temperatur in der Umgebung des Strahlers (18) unter Vermeidung einer direkten thermischen Beeinflussung durch den Strahler (18) gemessen wird,
b) daß aus den Temperaturdaten mit Hilfe einer Elektronik (21) eine erforderliche Bestrahlungsstärke für die Person (15) errechnet wird,
c) daß der Abstand (A) der Person (15) vom Strahler (18) ermittelt wird und
d) daß entsprechend der ermittelten Bestrahlungsstärke und dem ermittelten Abstand (A) die jeweils erforderliche Leistung in den Strahler (18) eingespeist wird.

2. Verfahren nach Anspruch 1, dadurch gekennzeichnet, daß die Temperaturmessung sowohl die durch Konvektion bewirkte Lufttemperatur als auch die Strahlungstemperatur der Raumbegrenzungsflächen (13) erfaßt.

3. Verfahren nach Anspruch 1 oder 2, dadurch gekennzeichnet, daß bei der Temperaturmessung auch der Einfluß der Luftgeschwindigkeit und/oder der Luftfeuchte berücksichtigt wird.

4. Verfahren nach einem der Ansprüche 1 bis 3, dadurch gekennzeichnet, daß der Abstand (A) zwischen der Person (15) und dem Strahler (18) entweder von Hand eingestellt und als konstante Größe in die Elektronik (21) eingegeben oder durch einen Sensor (23) automatisch gemessen wird.

5. Anordnung zur Durchführung eines Verfahrens nach einem der Ansprüche 1 bis 4, gekennzeichnet
- durch mindestens einen im Raum (12) angeordneten, auf die Person (15) ausgerichteten Strahler (18),
- durch ein in der Umgebung des Strahlers (18) angeordnetes und durch diesen nicht thermisch direkt beeinflußtes Meßgerät (16) zur Erfassung der Temperatur und
- durch eine Elektronik (21) zur Auswertung der Temperatur-Meßwerte und zur Steuerung der dem Strahler (18) zugeführten Energie.

6. Anordnung nach Anspruch 5, gekennzeichnet durch ein im Bereich des Strahlers (18) angeordnetes Meßgerät (22) zur Erfassung des Abstandes (A) zwischen der Person (15) und dem Strahler (18).

7. Anordnung nach Anspruch 5 oder 6, dadurch gekennzeichnet, daß als Meßgerät (22) ein Ultraschall-Meßgerät oder ein Infrarot-Meßgerät vorgesehen ist.

8. Anordnung nach einem der Ansprüche 5 bis 7, dadurch gekennzeichnet, daß der Strahler (18) beweglich angeordnet ist und mittels eines Bewegungsmelders (23) auf die Person (15) ausrichtbar und nachführbar angeordnet ist.

9. Anordnung nach einem der Ansprüche 5 bis 8, gekennzeichnet durch weitere in der Umgebung der Person (15) angeordnete Meßgeräte (24, 25) zur Erfassung der Luftfeuchte und der Luftgeschwindigkeit.

10. Anordnung nach einem der Ansprüche 5 bis 9, dadurch gekennzeichnet,
- daß die von der Umgebungstemperatur des Strahlers (18) abhängige, für die Erzielung einer gewünschten Behaglichkeitstemperatur erforderliche Bestrahlungsstärke für die Person in Form einer ersten Tabelle in der Elektronik (21) abgelegt ist und
- daß in einer zweiten Tabelle in der Elektronik (21) die von der Bestrahlungsstärke und dem Abstand Strahler (18) - Person (15) abhängige erforderliche Strahlerleistung abgelegt ist.
